# EUROPEAN PATENT SPECIFICATION

(11) **EP 3 818 812 B1**
(45) Date of publication and mention of the grant of the patent: **20.09.2023**
(21) Application number: 19207285.8
(22) Date of filing: 05.11.2019
(51) Int. Cl.: A01F 12/22, A01F 12/18

(54) **AGRICULTURAL HARVESTER INCLUDING A BEATER WITH SHOCK ABSORBENT BLADES**
LANDWIRTSCHAFTLICHE ERNTEMASCHINE MIT EINEM SCHLÄGER MIT STOßDÄMPFENDEN SCHAUFELN
MOISSONNEUSE AGRICOLE COMPRENANT UN BATTEUR DOTÉ DE PALES ABSORBANT LES CHOCS

(43) Date of publication of application: 12.05.2021
(73) Proprietor: CNH Industrial Belgium N.V., 8210 Zedelgem (BE)
(72) Inventor: Verhoeven, Marcel, 8210 Zedelgem (BE); Yde, Luc, 9968 Bassevelde (BE); Vanderstichele, Michiel, 8650 Merkem (BE); Van der Haegen, Johan A., 9890 Gavere (BE); Missotten, Bart M.A., 3020 Herent (BE)
(74) Representative: CNH Industrial IP Department

(56) References cited:
- EP-A1- 3 473 079
- EP-A2- 2 359 677
- GB-A- 2 472 639
- JP-A- 2005 225 357
- US-A- 2 298 445
- US-A- 2 349 380

## Description

### BACKGROUND OF THE INVENTION

The present invention relates to agricultural harvesters, and, more specifically to combine agricultural harvesters.

An agricultural harvester known as a "combine" is historically termed such because it combines multiple harvesting functions with a single harvesting unit, such as picking, threshing, separating, cleaning, and temporary storage. A combine includes a header which removes the crop from a field, and a feeder housing which transports the crop matter into a threshing drum. The threshing drum rotates within a perforated housing, which may be in the form of adjustable concaves and performs a threshing operation on the crop to remove the grain from the straw. Once the grain is threshed it falls through perforations in the concaves onto a grain pan. From the grain pan the grain is cleaned using a cleaning system, and is then transported to a grain tank onboard the combine. A cleaning fan blows air through the sieves to discharge chaff and other debris, which is also called material other than grain (MOG), toward the rear of the combine. Non-grain crop material such as straw from the threshing section proceeds through a residue system, which may utilize a straw chopper to process the non-grain material and direct it out the rear of the combine. When the grain tank becomes full, the combine is positioned adjacent a vehicle into which the grain is to be unloaded, such as a semi-trailer, chaser bin, straight truck, or the like; and an unloading system on the combine is actuated to transfer the grain into the vehicle.

More particularly, a threshing and separation system includes one or more drums which can extend transversely, in the case of what is known as a "conventional" combine, or axially, in the case of what is known as a "rotary" combine, within the body of the combine, and which are partially or fully surrounded by a perforated concave. The crop material is threshed and separated by the rotation of the drum within the concave. Coarser non-grain crop material such as stalks and leaves are transported to the rear of the combine and discharged back to the field. The separated grain, together with some finer non-grain crop material such as chaff, dust, straw, and other crop residue are discharged through the concaves and fall onto a grain pan where they are transported to a cleaning system. Alternatively, the grain and finer non-grain crop material may also fall directly onto the cleaning system itself.

A cleaning system further separates the grain from non-grain crop material, and typically includes a fan directing an airflow stream upwardly and rearwardly through horizontally arranged sieves which oscillate in a fore and aft manner. The airflow stream lifts and carries the lighter non-grain crop material towards the rear end of the combine for discharge to the field. Clean grain, being heavier, and larger pieces of non-grain crop material, which are not carried away by the airflow stream, fall onto a surface of an upper sieve (also known as a chaffer sieve) where some or all of the clean grain passes through to a lower sieve (also known as a cleaning sieve). Grain and non-grain crop material remaining on the upper and lower sieves are physically separated by the reciprocating action of the sieves as the material moves rearwardly. Any grain and/or non-grain crop material remaining on the top surface of the upper sieve are discharged at the rear of the combine. Grain falling through the lower sieve lands on a bottom pan of the cleaning system, where it is conveyed forwardly toward a clean grain auger.

The clean grain auger conveys the grain to a grain tank for temporary storage. The grain accumulates to the point where the grain tank is full and is discharged to an adjacent vehicle such as a semi trailer, chaser bin, straight truck or the like by an unloading system on the combine that is actuated to transfer grain into the vehicle.

Grain damage is a common occurrence during threshing and separation. Factors that lead to grain damage include abrasive rubbing and high processing speeds. Improvements to known threshing and separation systems have reduced grain damage, but grain damage still occurs, even in ideal harvesting conditions.

What is needed in the art is a threshing and separation system that addresses some of the previously described disadvantages of known threshing and separation systems.

Patent publication document GB2472639 discloses a combine harvester comprising a fan apparatus for generating an air stream through a cleaning apparatus to separate chaff from grain. The fan apparatus comprises a plurality of fan modules for generating mutually spaced air sub-streams.

Patent publication document US2298445 discloses a threshing drum comprising threshing elements provided with a flexible insert.

### SUMMARY OF THE INVENTION

The present invention provides a threshing and separation system with a beater that has a plurality of beater blades at least partially covered by a shock-absorbent material.

In some exemplary embodiments provided according to the present disclosure, a threshing and separation system for an agricultural harvester includes: a threshing drum including a plurality of rasp bars; a concave placed adjacent to the threshing drum such that rotation of the threshing drum rubs material against the concave; and a rotatable beater comprising a plurality of beater blades disposed rearwardly of the threshing drum and the concave and configured to rearwardly push crop material received from the threshing drum. At least some of the beater blades are at least partially covered by a shock-absorbent material to reduce damage to pushed crop material during rotation of the beater.

In some embodiments, the shock-absorbent material is applied to a wear strip that is coupled to at least one of the beater blades. Each wear strip may be fastened to a respective beater blade. Each wear strip may, for example, comprise a base material, preferably a metal. Each wear strip may comprise a top half and a bottom half that are symmetrical to each other. In some embodiments, each wear strip comprises at least one rounded edge, which may be a front edge and/or a rear edge of the wear strip.

In some embodiments, the shock-absorbent material is a coating applied to each of the beater blades.

In some embodiments, the shock-absorbent material comprises polyurethane.

In some embodiments, the shock-absorbent material has a Shore A hardness rating of 80 to 95 with high wear resistance specifications.

In some embodiments, the beater comprises at least eight beater blades. A separator drum may be disposed rearwardly of the beater and configured to receive crop material from the beater.

In some exemplary embodiments provided according to the present disclosure, an agricultural harvester includes a chassis carrying the previously described threshing and separation system.

A potential advantage that may be realized by the exemplary embodiments disclosed herein is that covering one or more of the beater blades with a shock-absorbent material can reduce the amount of crop material damaged by the high impact of the beater blades on the crop material.

### BRIEF DESCRIPTION OF THE DRAWINGS

The above-mentioned and other features and advantages of this invention, and the manner of attaining them, will become more apparent and the invention will be better understood by reference to the following description of an embodiment of the invention taken in conjunction with the accompanying drawings, wherein:
FIG. 1 is a side view of an exemplary embodiment of an agricultural harvester in the form of a combine including a threshing and separation system, provided in accordance with the present disclosure;
FIG. 2 is a side view of the threshing and separation system illustrated in FIG. 1;
FIG. 3 is a side view of a beater blade covered by a shock-absorbent material and included in the threshing and separation system illustrated in FIGS. 1-2, provided in accordance with the present disclosure;
FIG. 4 is a partially exploded view of a beater including the beater blade illustrated in FIG. 3;
FIG. 5 is a perspective view of a portion of the beater blade connected to the beater illustrated in FIG. 4 and a coupled wear strip;
FIG. 6 is a perspective view of an exemplary embodiment of a wear strip fastened to a beater blade, provided in accordance with the present disclosure; and
FIG. 7 is a perspective view of the wear strip illustrated in FIG. 6 after being used to process crop material, illustrating wear of the wear strip.

Corresponding reference characters indicate corresponding parts throughout the several views. The exemplification set out herein illustrates one embodiment of the invention, and such exemplification is not to be construed as limiting the scope of the invention within the limit of the appended claims.

### DETAILED DESCRIPTION OF THE INVENTION

The terms "grain", "straw" and "tailings" are used principally throughout this specification for convenience but it is to be understood that these terms are not intended to be limiting. Thus "grain" refers to that part of the crop material which is threshed and separated from the discardable part of the crop material, which is referred to as non-grain crop material, MOG or straw. Incompletely threshed crop material is referred to as "tailings". Also the terms "forward", "rearward", "left" and "right", when used in connection with the agricultural harvester and/or components thereof are usually determined with reference to the direction of forward operative travel of the harvester, but again, they should not be construed as limiting. The terms "longitudinal" and "transverse" are determined with reference to the fore-and-aft direction of the agricultural harvester and are equally not to be construed as limiting.

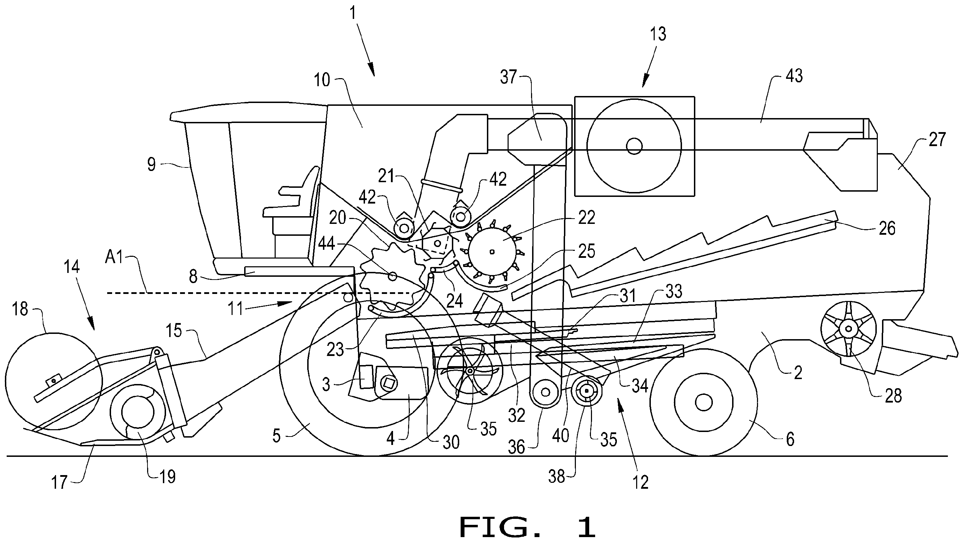

Referring now to the drawings, and more particularly to FIG. 1, a combine harvester, generally indicated at 1, comprises a chassis 2, supported on a fixed front axle 3 and an oscillating rear axle (not shown). The combine 1 defines a longitudinal axis A1 which extends generally parallel to a travel direction 47 of the combine 1. The front axle 3 carries a traction gearbox 4, that is drivingly connected to a pair of drive wheels 5, supporting the front portion of the chassis 2. The rear axle is supported by a pair of steerable wheels 6. Mounted onto the chassis 2 are an operator's platform 8, with an operator's cab 9, a grain tank 10, a threshing and separation system 11, a grain cleaning system 12, and a power plant or engine 13. A conventional grain header 14 and straw elevator 15 extend forwardly of the chassis 2 and are pivotally secured thereto for generally vertical movement, that is controlled by extensible hydraulic cylinders (not shown).

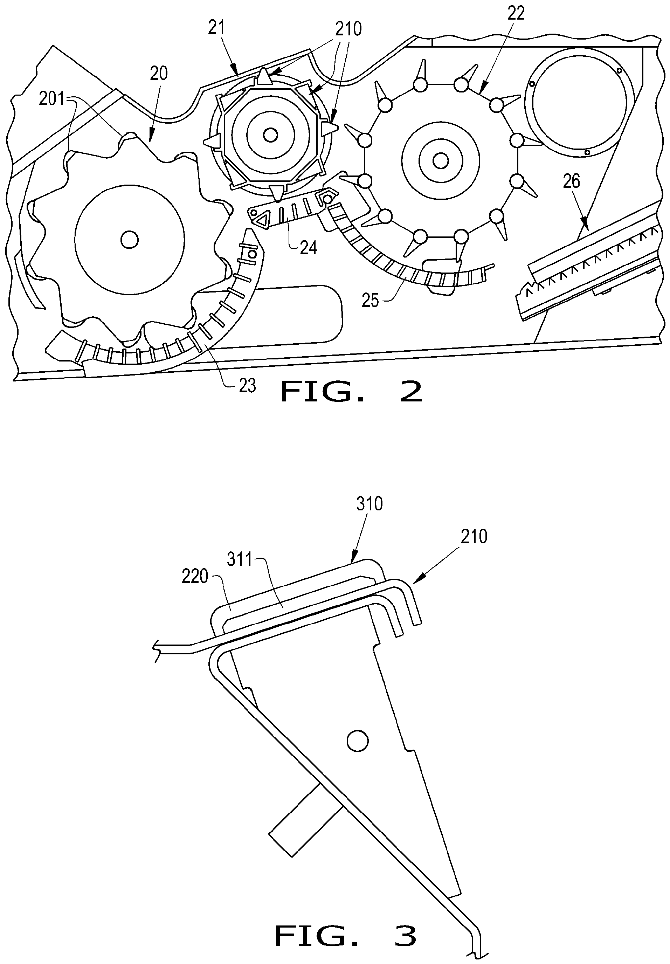

As the combine harvester 1 is propelled forwardly over a field with standing crop, the latter is severed from the stubble by a sickle bar 17 at the front of the header 14 and guided by a reel 18 and an auger 19 to the straw elevator 15, that supplies the cut crop to the threshing and separation system 11. The crop received therein is threshed and separated, that is to say, the crop is rubbed and beaten, whereby the grain, seed or the like, is loosened and separated from the straw, crop waste or other discardable part of the crop. The combine harvester 1, illustrated in FIG. 1, comprises a threshing and separation system 11 including a threshing drum 20, a straw beater 21 and a separator drum 22, co-operating with a set of respectively adjacent concaves 23, 24, 25. Conventional straw walkers 26 are operable, in use, to discharge a mat of remaining crop material (i.e. mainly straw as most grain is separated therefrom) through a straw hood 27 to a straw chopper 28 that chops the straw and ejects it onto the field. As further illustrated in FIG. 2, the threshing drum 20 includes a plurality of rasp bars 201 that rub crop material against the concave 23.

Grain that has been separated by the threshing and separation system 11 falls onto a first grain pan 30 of the cleaning system 12, that further also comprises a pre-cleaning sieve 31, positioned above a second grain pan 32, an upper chaffer sieve 33 and a lower grain sieve 34, disposed the one above the other behind and below the pre-cleaning sieve 31, and a cleaning fan 35.

The grain pans 30, 32 and the sieves 31, 33, 34 are oscillated generally back-and-forth for transporting threshed and separated grain from the first grain pan 30 to the pre-cleaning sieve 31 and the second grain pan 32 and therefrom to the sieves 33, 34. The same oscillatory movement spreads the grain across the sieves 31, 33, 34, while permitting the passage of cleaned grain by gravity through the apertures of these sieves. The grain on the sieves 31, 33, 34 is subjected to a cleaning action by the fan 35 that provides an air flow through the sieves to remove chaff and other impurities such as dust from the grain by making this material airborne for discharge from the machine.

Clean grain falls to a clean grain auger (not shown) in a clean grain auger trough 36 and is subsequently transferred by the auger and an elevator mechanism 37 to the grain tank 10. Incompletely threshed ears, the so-called "tailings", fall to a tailings auger (not shown) in a tailings auger trough 38. The tailings are transported sideways by this auger to a separate re-thresher 39 and returned by a tailings elevator 40 to the first grain pan 30 for repeated cleaning action.

A pair of grain tank augers 42 at the bottom of the grain tank 7 is used to urge the clean grain sideways to an unloading tube 43, wherein it is elevated by unloading augers (not shown) for discharge from the harvester 1.

In known combine harvesters, grain damage is a common occurrence. In certain crop conditions, grain damage percentages of 7% and higher have been observed. Such a high damage percentage causes significant financial issues for farmers because damaged grain is considerably less valuable and/or more susceptible to spoilage than undamaged grain. It has been discovered that an area where grain damage commonly occurs is at the transition from the threshing drum to the beater in the threshing and separation system. This area has a high amount of grain flowing therethrough. Further, the change in direction of the crop flow and the high impact forces exerted on free grain kernels by the beater blades results in a relatively high amount of grain material being damaged.

To address some of the previously described issues, and referring now to FIGS. 2 and 3, the threshing and separation system 11 provided according to the present disclosure includes a rotatable beater 21 with a plurality of beater blades 210 that are at least partially covered by a shock-absorbent material 220. The beater 21 is disposed rearwardly of the threshing drum 20 and concave 23 and is configured to rearwardly push crop material received from the threshing drum 20, i.e., toward the separator drum 22, which is disposed rearwardly of the beater 21 and receives crop material from the beater 21. Due to the potential for grain damage at the beater 21, at least partially covering some or all of the beater blades 210 moving the crop material with the shock-absorbent material 220 reduces damage to pushed crop material during rotation of the beater 21. As used herein, the "shock-absorbent" material 220 is material that is resiliently deformable so some of the impact between the shock-absorbent material 220 and the pushed crop material is absorbed by the material 220 to reduce the impact between the crop material and the beater blades 210. A smaller impact is less likely to damage the grain, which reduces the amount of grain damaged during processing.

The shock-absorbent material 220 may be, for example, a material with a Shore A hardness of between 80 and 95, such as a polyurethane. It should be appreciated that a wide variety of shock-absorbent materials may be utilized according to the present disclosure, and the foregoing materials are exemplary only. The shock-absorbent material 220 may also have high resistance to abrasive and erosive wear and suitable mechanical strength to be used on the beater blade 210 during operation. The shock-absorbent material 220 may cover a majority of a surface area of one or more of the beater blades 210; in some embodiments, the shock-absorbent material 220 does not cover an entirety of the surface area of each beater blade 210. For example, the shock-absorbent material 220 may cover at least 50% of the surface area of the beater blade 210. In this respect, the majority of the surface area of the beater blade 210 may be covered by the shock-absorbent material 220 to reduce the amount of surface area of the beater blade 210 that is exposed to impact crop material during rotation.

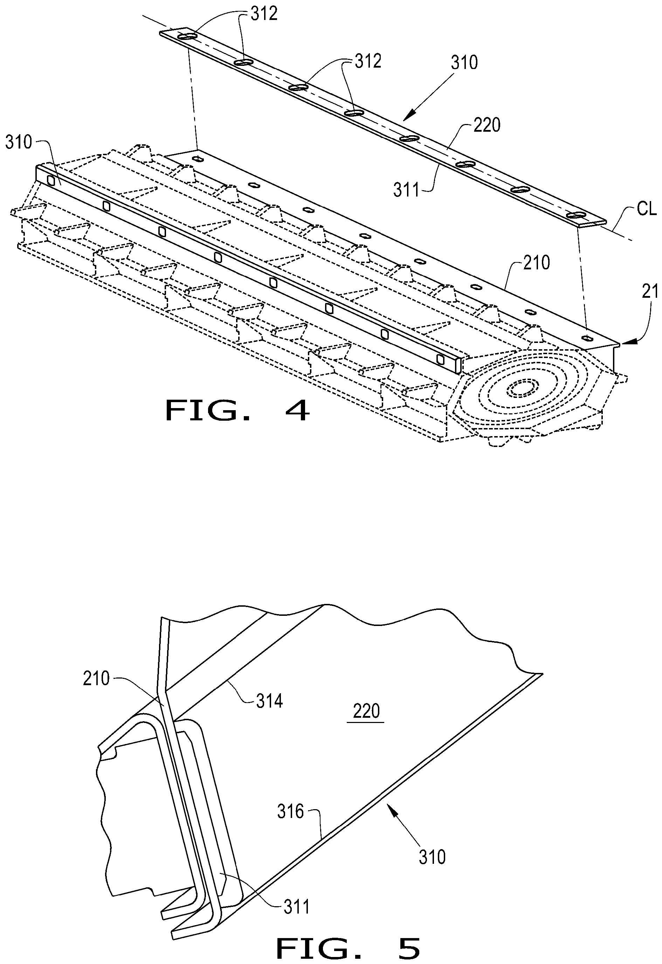

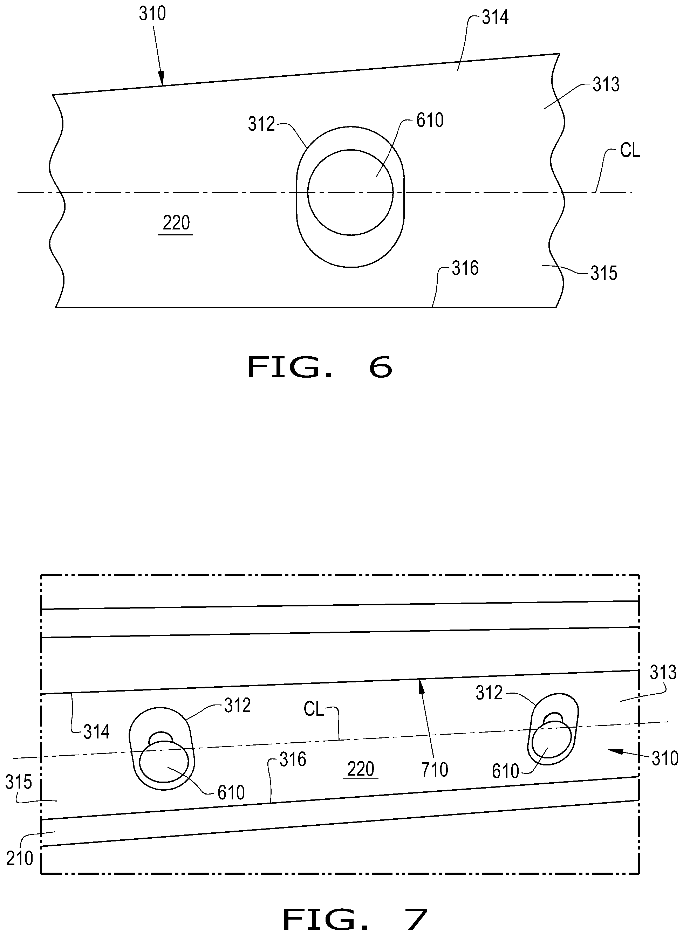

In some embodiments, and referring now to FIGS. 4-7 as well, the shock-absorbent material 220 is applied to a wear strip 310 that is coupled to one or more of the beater blades 210. As illustrated, a wear strip 310 may be applied to each of the eight beater blades 210 of the beater 21, but it should be appreciated that a wear strip does not need to be applied to each beater blade 210 and the number of beater blades 210 may be more or less than eight. Each wear strip 310 may be fastened to its respective beater blade 210 with a fastener, such as a bolt 610 (illustrated in FIGS. 6-7), to allow for easy installation and replacement of the wear strips 310. The wear strip 310 may have a plurality of fastener openings 312 formed therein to accept the fasteners 610. Each wear strip 310 may comprise a base material 311, which may be a metal such as stainless steel or aluminum. In some embodiments, the wear strip 310 is formed by coating the base material 311 with the shock-absorbent material 220, which may then be vulcanized; alternatively, the shock-absorbent material 220 can be fastened to the base material 311 with a fastener, which may be the same fastener that couples the wear strip 310 to the beater blade 210, e.g., the bolt 610. The base material 311 may be approximately the same length and width as the beater blade 210 so the base material 311 can cover most of the beater blade 210 when installed. Alternatively, each wear strip 310 may be formed entirely of the shock-absorbent material 220 and fastened to the beater blade 210.

Referring specifically now to FIGS. 6 and 7, a wear strip 310 is illustrated when initially coupled to a beater blade 310 (FIG. 6) and after being used to process crop material (FIG. 7). As can be appreciated from FIGS. 6 and 7, the wear strip 310 experiences wear at a leading edge 710 that is in the direction of rotation of the beater 21. As the wear strip 310 wears away by abrasion, more of the beater blade 210 may become exposed, which can subject the beater blade 210 to wear and/or the crop material to high impacts and can be appreciated from comparing FIGS. 6 and 7.

Each wear strip 310 may include a top half 313 including a first rounded edge 314 and a bottom half 315 including a second rounded edge 316. To increase the effective life of the wear strip 310, the top half 313 and the bottom half 315 of the wear strip 310 may be symmetrical to each other about a longitudinal centerline CL that extends parallel to the length of the wear strip 310. By forming the wear strip 310 symmetrically, the wear strip 310 may be reversed so a front edge (the first rounded edge 314 of the top half 313) and a rear edge (the second rounded edge 314 of the bottom half 315) of the wear strip 310 switch positions. By reversing the wear strip 310 in this manner, the effective life of the wear strip 310 can be doubled because the non-leading edge of the wear strip 310 does not impact crop material as aggressively as the leading edge and experiences relatively little, if any, wear during usage.

While the shock-absorbent material 220 is previously described as being part of a wear strip 310 that is removably fastened to the beater blades 210, in some embodiments the beater blades 210 are at least partially coated with the shock-absorbent material 220, i.e., the shock-absorbent material 220 is directly applied to the surface of the beater blades 210. Directly coating the beater blades 210 with the shock-absorbent material 220 can provide a ready-to-use solution that does not require an operator to install wear strips on the beater blades 210.

From the foregoing, it should be appreciated that at least partially covering the beater blades 210 with the shock-absorbent material 220 can reduce the occurrence of crop material damage during processing of crop material. The transition from the threshing drum 20 to the beater 21 is an area where a significant amount of crop material damage has been discovered due to high volumes of crop material flow and high impact forces due to the crop material flow changing directions. Reducing the impact of the beater blades 210 on the crop material by using the shock-absorbent material 220 can thus significantly reduce the amount of physical damage to crop material that occurs during processing. Providing the shock-absorbent material 220 on a replaceable wear strip 310, or as a coating on the beater blades 210, thus provides an economical solution to reducing crop material damage that has few, if any, adverse effects on processing of the crop material.

## Claims

1. A threshing and separation system (11) for an agricultural harvester (1), comprising:
a threshing drum (20) comprising a plurality of rasp bars (201);
a concave (23) placed adjacent to the threshing drum (20) such that rotation of the threshing drum (20) rubs material against the concave (23); and
a rotatable beater (21) comprising a plurality of beater blades (210) disposed rearwardly of the threshing drum (20) and the concave (23) and configured to rearwardly push crop material received from the threshing drum (20);
**characterized in that**:
at least some of the beater blades (210) are at least partially covered by a shock-absorbent material (220) to reduce damage to pushed crop material during rotation of the beater (21).

2. The threshing and separation system (11) of claim 1, wherein the shock-absorbent material (220) is applied to a wear strip (310) that is coupled to at least some of the beater blades (210).

3. The threshing and separation system (11) of claim 2, wherein each wear strip (310) is fastened to a respective beater blade (210).

4. The threshing and separation system (11) of any one of claims 2 to 3, wherein each wear strip (310) comprises a base material (311), preferably comprising a metal.

5. The threshing and separation system (11) of any one of claims 2 to 4, wherein each wear strip (310) comprises a top half (313) and a bottom half (315) that are symmetrical to each other.

6. The threshing and separation system (11) of any one of claims 2 to 5, wherein each wear strip (310) comprises at least one rounded edge (314, 316).

7. The threshing and separation system (11) of claim 6, wherein the at least one rounded edge (314, 316) is a front edge (314) and/or a rear edge (316) of the wear strip (310).

8. The threshing and separation system (11) of claim 1, wherein the shock-absorbent material (220) is a coating applied to each of the beater blades (210).

9. The threshing and separation system (11) of any of the preceding claims, wherein the shock-absorbent material (220) comprises polyurethane.

10. The threshing and separation system (11) of any of the preceding claims, wherein the shock-absorbent material (220) has a Shore A hardness rating of 80 to 95.

11. The threshing and separation system (11) of any of the preceding claims, wherein the beater (21) comprises at least eight beater blades (210).

12. The threshing and separation system (11) of any of the preceding claims, wherein the shock-absorbent material (220) covers at least 50% of a surface area of the beater blade (210).

13. The threshing and separation system (11) of any of the preceding claims, further comprising a separator drum (22) disposed rearwardly of the beater (21) and configured to receive crop material from the beater (21).

14. An agricultural harvester (1) comprising a chassis (2) carrying the threshing and separation system (11) of any of the preceding claims.

## Patentansprüche

1. Dresch- und Abscheidesystem (11) für eine landwirtschaftliche Erntemaschine (1) mit:
einer Dreschtrommel (20) mit einer Mehrzahl von Schlagleisten (201);
einem Dreschkorb (23), der angrenzend an die Dreschtrommel (20) angeordnet ist, so dass die Rotation der Dreschtrommel (20) Erntegut gegen den Dreschkorb (23) reibt; und
einem drehbaren Schläger (21) mit einer Mehrzahl von Schlägerschaufeln (210), die hinter der Dreschtrommel (20) und dem Dreschkorb (23) angeordnet sind und der dazu eingerichtet ist, von der Dreschtrommel (20) empfangenes Erntegut nach hinten zu schieben;
**dadurch gekennzeichnet, dass**:
mindestens einige der Schlägerschaufeln (210) mindestens teilweise von einem schlagabsorbierenden Material (220) abgedeckt sind, um Schäden an dem zu schiebenden Erntegut während der Rotation der Schläger (210) zu reduzieren.

2. Dresch- und Abscheidesystem (11) nach Anspruch 1, wobei das schlagabsorbierende Material (220) auf einen Verschleißstreifen (310) aufgebracht ist, der mit mindestens einigen der Schlägerschaufeln (210) gekoppelt ist.

3. Dresch- und Abscheidesystem (11) nach Anspruch 2, wobei jeder Verschleißstreifen (310) an jeweils einer entsprechenden Schlägerschaufel (210) befestigt ist.

4. Dresch- und Abscheidesystem (11) nach einem der Ansprüche 2 bis 3, wobei jeder Verschleißstreifen (310) ein Grundmaterial (311), vorzugsweise ein Metall, aufweist.

5. Dresch- und Abscheidesystem (11) nach einem der Ansprüche 2 bis 4, wobei jeder Verschleißstreifen (310) eine obere Hälfte (313) und eine untere Hälfte (315) aufweist, die symmetrisch zueinander sind.

6. Dresch- und Abscheidesystem (11) nach einem der Ansprüche 2 bis 5, wobei jeder Verschleißstreifen (310) mindestens eine abgerundete Kante (314, 316) aufweist.

7. Dresch- und Abscheidesystem (11) nach Anspruch 6, wobei die mindestens eine abgerundete Kante (314, 316) eine vordere Kante (314) und/oder eine hintere Kante (316) des Verschleißstreifens (310) ist.

8. Dresch- und Abscheidesystem (11) nach Anspruch 1, wobei das schlagabsorbierende Material (220) eine Beschichtung ist, die auf jede der Schlägerschaufeln (210) aufgebracht ist.

9. Dresch- und Abscheidesystem (11) nach einem der vorhergehenden Ansprüche, wobei das schlagabsorbierende Material (220) Polyurethan aufweist.

10. Dresch- und Abscheidesystem (11) nach einem der vorhergehenden Ansprüche, wobei das schlagabsorbierende Material (220) einen Shore A Härtegrad von 80 bis 95 aufweist.

11. Dresch- und Abscheidesystem (11) nach einem der vorhergehenden Ansprüche, wobei der Schläger (21) mindestens acht Schlägerschaufeln (210) aufweist.

12. Dresch- und Abscheidesystem (11) nach einem der vorhergehenden Ansprüche, wobei das schlagabsorbierende Material (220) mindestens 50 % eines Flächenbereichs der Schlägerschaufel (210) abdeckt.

13. Dresch- und Abscheidesystem (11) nach einem der vorhergehenden Ansprüche, das des Weiteren eine Abscheidetrommel (22) aufweist, die hinter dem Schläger (21) angeordnet und dazu eingerichtet ist, Erntegut von dem Schläger (21) zu empfangen.

14. Landwirtschaftliche Erntemaschine (1) mit einem Fahrgestell (2), das das Dresch- und Abscheidesystem (11) nach einem der vorhergehenden Ansprüche trägt.

## Revendications

1. Système de battage et de séparation (11) pour une moissonneuse agricole (1), comprenant :
un rouleau de battage (20) comprenant une pluralité de barres de râpe (201) ;
un contre-batteur (23) placé de manière adjacente au rouleau de battage (20) de sorte que la rotation du rouleau de battage (20) frotte le matériau contre le contre-batteur (23) ; et
un batteur rotatif (21) comprenant une pluralité de lames du batteur (210) placées vers l'arrière du rouleau de battage (20) et du contre-batteur (23) et configurées pour pousser vers l'arrière le matériau de récolte reçu du rouleau de battage (20) ;
**caractérisé en ce que** :
au moins certaines des lames du batteur (210) sont au moins partiellement recouvertes d'un matériau absorbant les chocs (220) afin de réduire les dommages causés au matériau de récolte poussé pendant la rotation du batteur (21).

2. Système de battage et de séparation (11) selon la revendication 1, dans lequel le matériau absorbant les chocs (220) est appliqué sur une bande d'usure (310) qui est couplée à au moins certaines des lames du batteur (210).

3. Système de battage et de séparation (11) selon la revendication 2, dans lequel chaque bande d'usure (310) est fixée à une lame du batteur respective (210).

4. Système de battage et de séparation (11) selon l'une quelconque des revendications 2 à 3, dans lequel chaque bande d'usure (310) comprend un matériau de base (311), comprenant de préférence un métal.

5. Système de battage et de séparation (11) selon l'une quelconque des revendications 2 à 4, dans lequel chaque bande d'usure (310) comprend une moitié supérieure (313) et une moitié inférieure (315) symétriques l'une par rapport à l'autre.

6. Système de battage et de séparation (11) selon l'une quelconque des revendications 2 à 5, dans lequel chaque bande d'usure (310) comprend au moins un bord arrondi (314, 316).

7. Système de battage et de séparation (11) selon la revendication 6, dans lequel l'au moins un bord arrondi (314, 316) est un bord avant (314) et/ou un bord arrière (316) de la bande d'usure (310).

8. Système de battage et de séparation (11) selon la revendication 1, dans lequel le matériau absorbant les chocs (220) est un revêtement appliqué à chacune des lames du batteur (210).

9. Système de battage et de séparation (11) selon l'une quelconque des revendications précédentes, dans lequel le matériau absorbant les chocs (220) comprend du polyuréthane.

10. Système de battage et de séparation (11) selon l'une quelconque des revendications précédentes, dans lequel le matériau absorbant les chocs (220) a une dureté Shore A comprise entre 80 et 95.

11. Système de battage et de séparation (11) selon l'une quelconque des revendications précédentes, dans lequel le batteur (21) comprend au moins huit lames du batteur (210).

12. Système de battage et de séparation (11) selon l'une quelconque des revendications précédentes, dans lequel le matériau absorbant les chocs (220) couvre au moins 50 % de la surface de la lame du batteur (210).

13. Système de battage et de séparation (11) selon l'une quelconque des revendications précédentes, comprenant en outre un tambour séparateur (22) placé à l'arrière du batteur (21) et configuré pour recevoir le matériau de récolte du batteur (21).

14. Moissonneuse agricole (1) comprenant un châssis (2) portant le système de battage et de séparation (11) selon l'une quelconque des revendications précédentes.
